(19) Europäisches Patentamt
European Patent Office
Office européen des brevets

(11) EP 2 047 006 B1

(12) **EUROPEAN PATENT SPECIFICATION**

(45) Date of publication and mention
of the grant of the patent:
**27.07.2011 Bulletin 2011/30**

(51) Int Cl.:
***C22C 29/16*** (2006.01)          ***C22C 29/12*** (2006.01)
***B24D 3/14*** (2006.01)

(21) Application number: **07789413.7**

(22) Date of filing: **08.06.2007**

(86) International application number:
**PCT/IB2007/001551**

(87) International publication number:
**WO 2007/144733 (21.12.2007 Gazette 2007/51)**

(54) **ULTRAHARD COMPOSITES**

ULTRAHARTE VERBUNDWERKSTOFFE

COMPOSITES ULTRA-DURS

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **09.06.2006 ZA 200604765**

(43) Date of publication of application:
**15.04.2009 Bulletin 2009/16**

(73) Proprietor: **Element Six (Production) (Pty) Ltd.
1559 Springs (ZA)**

(72) Inventors:
• **CAN, Antionette
1459 Sunward Park (ZA)**

• **DAVIES, Geoffrey John
2194 Randburg (ZA)**
• **MOCHUBELE, Anna Emela
1501 Benoni (ZA)**
• **MYBURGH, Johannes Lodewikus
1724 Helderkruin (ZA)**

(74) Representative: **Benson, John Everett et al
J. A. Kemp & Co.
14 South Square
Gray's Inn
London WC1R 5JJ (GB)**

(56) References cited:
**EP-A- 0 698 447          EP-A- 0 974 566
WO-A-2006/032982**

**Description**

## BACKGROUND OF THE INVENTION

THIS invention relates to ultrahard composite materials.

Ultrahard composite materials, typically in the form of abrasive compacts, are used extensively in cutting, milling, grinding, drilling and other abrasive operations. They generally contain ultrahard abrasive particles dispersed in a second phase matrix. The matrix may be metallic or ceramic or a cermet. The ultrahard abrasive particles may be diamond, cubic boron nitride (cBN), silicon carbide or silicon nitride and the like. These particles may be bonded to each other during the high pressure and high temperature compact manufacturing process generally used, forming a polycrystalline mass, or may be bonded via the matrix of second phase material(s) to form a polycrystalline mass. Such bodies are generally known as polycrystalline diamond (PCD), or polycrystalline cubic boron nitride (PCBN), where they contain diamond or cBN as the ultrahard particles, respectively.

PCT application WO2006/032984 discloses a method of manufacturing a polycrystalline abrasive element, which includes the steps of providing a plurality of ultrahard abrasive particles having vitreophilic surfaces, coating the ultrahard abrasive particles with a matrix precursor material, treating the coated ultrahard abrasive particles to render them suitable for sintering, preferably to convert the matrix precursor material to an oxide, nitride, carbide, oxynitride, oxycarbide, or carbonitride of the matrix precursor material, or an elemental form of the matrix precursor material, or combinations thereof, and consolidating and sintering the coated ultrahard abrasive particles at a pressure and temperature at which they are crystallographically or thermodynamically stable. In this way ultrahard polycrystalline composite materials are made having ultrahard particles homogeneously dispersed in fine, sub-micron and nano grained matrix materials.

The ultrahard abrasive elements typically comprise a mass of ultrahard particulate materials of any size or size distribution smaller than about several hundred microns, down to and including sub-micron and also nanosizes (particles less than 0.1 microns i.e. 100nm), which are well dispersed in a continuous matrix made of extremely fine grained oxide ceramics, nonoxide ceramics, cermets or combinations of these classes of materials.

EP 0 698 447 discloses another approach to the generation of ultrahard composite materials, whereby the matrix is generated by the pyrolysis of organometallic polymer precursors, such as pyrolysis of polymerized polysilazanes. This has particular utility for the generation of ultrahard composites derived from diamond and/or cBN where the ceramic matrices are selected from silicon carbide, silicon nitride, silicon carbonitride, silicon dioxide, boron carbide, aluminium nitride, tungsten carbide, titanium nitride, and titanium carbide.

It is desirable for the ultrahard composites to be optimizeable in regard to their mechanical properties and their performance in applications. In particular superior performance is desired in wear related applications such as machining of hard to machine materials and rock drilling.

## SUMMARY OF THE INVENTION

According to the invention which is given in the claims, there is provided an ultrahard composite material comprising diamond or cubic boron nitride ultrahard particles, or a combination thereof, dispersed in a nano-grain sized matrix material comprising chromium nitride (CrN or $Cr_2N$), titanium nitride (TiN), tantalum nitride (TaN or $Ta_3N_5$), niobium nitride (NbN), vanadium nitride (VN), zirconium nitride (ZrN), hafnium nitride (HfN), silicon nitride ($Si_3N_4$), silicon dioxide ($SiO_2$), titanium carbide (TiC), tantalum carbide (TaC or $Ta_2C$), niobium carbide (NbC), vanadium carbide (VC), zirconium carbide (ZrC), hafnium carbide (HfC), silicon carbide (SiC), aluminium oxide ($Al_2O_3$), zirconium oxide ($ZrO_2$), or combi-nations thereof, wherein the average grain size of the matrix material is within 30nm of the Hall-Petch departure grain size for the matrix material.

There is also disclosed a method of producing an ultrahard abrasive composite material includes the steps of providing a source of ultrahard particles, contacting the ultrahard particles with a nano grain sized matrix precursor material to form a reaction volume, and consolidating and sintering the reaction volume at a pressure and a temperature at which the ultrahand particles are crystallographically or thermodynamically stable, characterised in that the average grain size or the matrix precursor material is such as to provide a matrix material having an average grain size that is within 30nm of the Hall-Petch departure grain size for the matrix material.

The average grain size of the matrix material is preferably within 20nm of, more preferably within 10nm of, and most preferably at or near (as close as is practically possible) the Hall-Petch departure grain size for the matrix material.

The ultrahard composite material of the invention comprises micron or sub-micron diamond and/or cBN particles, dispersed in a nano-grain sized matrix comprising chromium nitride (CrN or $Cr_2N$), titanium nitride (TiN), tantalum nitride (TaN or $Ta_3N_5$), niobium nitride (NbN), vanadium nitride (VN), zirconium nitride (ZrN), hafnium nitride (HfN), silicon nitride ($Si_3N_4$), silicon dioxide ($SiO_2$), titanium carbide (TiC), tantalum carbide (TaC or $Ta_2C$), niobium carbide (NbC), vanadium carbide (VC), zirconium carbide (ZrC), hafnium carbide (HfC), silicon carbide (SiC), aluminium oxide ($Al_2O_3$),

zirconium oxide ($ZrO_2$), or combinations thereof.

DETAILED DESCRIPTION OF PREFERRED EMBODIMENTS

The ultrahard composite materials of the invention, typically formed as polycrystalline abrasive bodies, also referred to as polycrystalline abrasive elements, are used as cutting tools for turning, milling and honing, drilling cutters for rock, ceramics and metals, wear parts and the like. The invention is particularly directed to tailoring the average grain size of the matrix material of the composite materials so that the expected improvements in properties and behaviour in applications as a result thereof can be exploited.

The invention takes advantage of the methods of manufacturing ultrahard abrasive composite materials disclosed in PCT application WO2006/032984 and EP 0 698 447, which are optimised in accordance with the present invention.

In particular the grain size of the matrix materials, and preferably also the thermal expansion coefficient mismatch between the ultrahard particles and the matrix materials, are tailored to produce the ultrahard abrasive composites of the invention.

The ultrahard composite materials may be generated by the sintering of the matrix material at high temperature and pressure. At these conditions both particles and matrix reach elastic, plastic equilibrium with each other after sintering and thus there will be an absence of local stress, provided the high temperature and pressure conditions are maintained.

On cooling to room temperature, however, differences in thermal expansion coefficient between the ultrahard particles and the matrix will generate local stresses at the scale of the particle, matrix microstructure.

It is known in the literature that the thermal expansion mismatch stress, $\sigma_T$ inside a single spherical particle in an infinite matrix may be expressed by the Selsing formula, (J. Selsing; "Internal Sresses in Ceramics"; J. Am. Ceram. Soc., 1961, vol.44, p 419.):

$$\sigma_T = \Delta\alpha\Delta T / \Gamma \qquad \dots\dots\dots\dots\dots\dots\dots\dots\dots\dots\dots\dots\dots\dots\dots\dots(1)$$

where

$$\Delta\alpha = \alpha_p - \alpha_m \qquad \dots\dots\dots\dots\dots\dots\dots\dots\dots\dots\dots\dots\dots\dots\dots(2)$$

which is the difference in thermal expansion coefficient between the particle, $\alpha_p$ and the matrix, $\alpha_m$; where

$$\Delta T = T_{pl} - T_{room} \qquad \dots\dots\dots\dots\dots\dots\dots\dots\dots\dots\dots\dots\dots\dots(3)$$

which is the difference between the elastic, plastic transition temperature of the matrix, $T_{pl}$, and room temperature, $T_{room}$; and where

$$\Gamma = (1 + \upsilon_m) / 2E_m + (1 - 2\upsilon p) / Ep \dots\dots\dots\dots\dots\dots\dots\dots\dots\dots\dots(4)$$

where $\upsilon$ is Poisson's ratio, $E$ is Young's modulus, and the subscripts m and $p$ denote matrix and particle, respectively.

The tangential, $\sigma_{Ti}$, , and radial, $\sigma_{Tr}$ stress distributions in the matrix around the particle may be given by:

$$\sigma_{Tt} = -(\sigma_T / 2)(r_p / x)^3 \dots\dots\dots\dots\dots\dots\dots\dots\dots\dots\dots\dots\dots\dots\dots\dots\dots(5)$$

and

$$\sigma_{Tr} = \sigma_T\left(r_p / x\right)^3 \ldots\ldots\ldots\ldots\ldots\ldots\ldots\ldots\ldots\ldots\ldots\ldots\ldots\ldots\ldots(6)$$

where $r_p$ denotes the radius of the particle and $x$ is the radial distance from the particle.

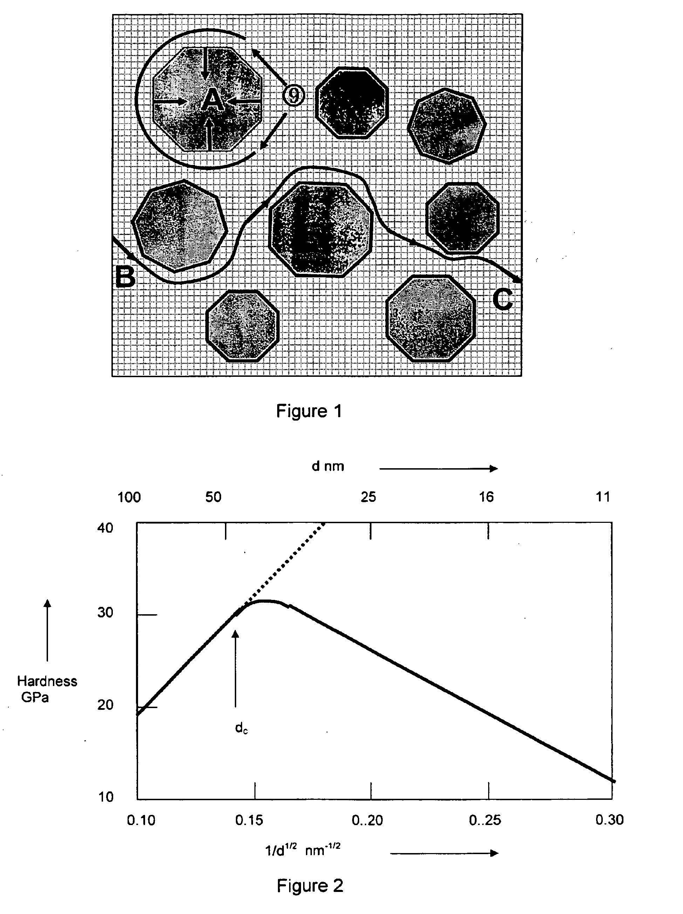

In the case where $\alpha_m$ is greater than $\alpha_p$, the average thermal stresses are compressive in the particles and tensile in the matrix, as illustrated in Figure 1 of the accompanying drawings.

The Selsing model, formulae (1) through to (6), indicates that the local internal stresses in a composite material, made up of particles distributed in a continuous matrix, should be dependent upon the sense and magnitude of the thermal expansion coefficient difference between the particles and the matrix. The larger the thermal expansion difference the larger the expected stress distributions at the scale of the hard particle, matrix microstructure. It is expected, therefore, that the mechanical properties and mechanisms of fracture of a composite material can thus be significantly affected by, and dependent upon, the relative thermal expansion coefficients of the hard particle material and the continuous matrix material. A particular model of this would be for the case illustrated in Figure 1 where ultrahard particles of low thermal expansion coefficient are distributed in a continuous nano grain sized matrix of higher thermal expansion coefficient. Note that the ultrahard particles are in compression, as illustrated by the arrows in particle A, and that there are tensile stresses in the matrix around each particle, $\sigma_{Tens}$. The compressive stress on the particles should theoretically inhibit crack transmission through the particles. The tensile stresses at or close to the interface of the particles with the matrix should, however, attract the passage of cracks. This model therefore indicates that a dominant fracture mode for composites of this type may well be fracture in the matrix, following a path around the ultrahard particles, i.e intergranular fracture. Deflection of cracks around the hard particles may well be regarded as a toughening mechanism.

In Figure 1, **B** to **C** represents a crack path in the matrix following tangential tensile stresses close to, or at, the particle matrix interfaces. In such a case, the strength of the composite would thus be dependent upon the ability of the matrix to resist the passage of cracks. The ability of the matrix to resist the passage of cracks is dependent upon the intrinsic strength of the matrix material. Thus for each ultrahard composite material the strongest composite will be where the strength of the matrix material is at a maximum.

The mechanical properties, in particular the strength, of polycrystalline materials are dependent upon the grain size of the materials. For most typical materials the relationship between flow stress, $\sigma_f$, and grain size is given by the empirical Hall-Petch relation[2][3] [4][5]:

$$\sigma_f = \sigma_0 + k\left(d\right)^{-1/2} \ldots\ldots\ldots\ldots\ldots\ldots\ldots\ldots\ldots\ldots\ldots\ldots\ldots\ldots\ldots(7)$$

where $\sigma_0$ is a lattice friction stress below which dislocations will not move in the material in the absence of grain boundaries, $k$ a (positive) material constant and $d$ is the grain diameter. This equation implies that any decrease in grain size should increase flow strength. Numerous investigators have reported very high strengths and associated Hall-Petch behaviour in materials as the grain size approaches and becomes nano sized (less than 100nm). For materials where the strength exhibits a Hall-Petch dependence with grain size, the hardness also is expected to be given by a similar equation. This has been shown in empirical plots of hardness versus $1/d^{1/2}$ for many materials. Typically when hardness is plotted against $1/d^{1/2}$, a straight line of positive slope k is generated.

However, the empirical Hall-Petch relationship has been shown to break down for some materials for fine enough grain sizes where the plot exhibits a departure from the linear relationship and may even take on a subsequent negative slope for very fine grain sizes[5] [6], For many materials this transition from grain-size strengthening to grain-size softening, so called "inverse" Hall-Petch behavior, is observed at a critical grain size. This implies that the mechanical properties are progressively dominated by the behavior of the grain boundaries in their response to stress as opposed to the bulk mechanical properties of the grains themselves[5] [6]. For many materials, this "softening" of the material for grain sizes smaller than the critical value has been observed to occur at grain sizes in the nano scale (less than 100nm), typically in the region of several to a few tens of nanometers[7]. This critical size may be termed as "the point of Hall-Petch departure". Figure 2 of the accompanying drawings is a schematic representation of a Hall-Petch plot for a typical nano grain sized ceramic, showing the Hall-Petch departure critical grain size, $d_c$, [5].

Implicit in the observations of empirical Hall-Petch plots, therefore, is that the strongest, hardest version of the particular material being considered as a function of grain size will be that material with an average grain size as close as possible to the Hall-Petch departure grain size, ($d_c$ in Figure 2).

The present invention provides a means of invoking the empirical Hall-Petch relationship and Selsing models relating thermal expansion mismatch to stresses and applies them in the production of ultrahand composite materials.

In each desired ultrahard composite material, where the ultrahard particles are diamond, cBN or a combination of these materials, and the matrix material comprises chromium nitride (CrN or $Cr_2N$), titanium nitride (TiN), tantalum

nitride (TaN or $Ta_3N_5$), niobium nitride (NbN), vanadium nitride (VN), zirconium nitride (ZrN), hafnium nitride (HfN), silicon nitride ($Si_3N_4$), silicon dioxide ($SiO_2$), titanium carbide (TiC), tantalum carbide (TaC or $Ta_2C$), niobium carbide (NbC), vanadium carbide (VC), zirconium carbide (ZrC), hafnium carbide (HfC), silicon carbide (SiC), aluminium oxide ($Al_2O_3$), zirconium oxide ($ZrO_2$), or combinations thereof, the average grain size of the matrix is chosen to be as close to the empirically determined Hall-Petch departure critical grain size of the particular matrix material as possible. In so doing the mechanical properties of the composite are believed to be optimised, whilst all other aspects of the composition and structure are kept constant, such as ultrahard particle size and size distribution, ultrahard particle/matrix volume ratio, degree of homogeneity of ultrahard particle to matrix and ultrahard particle / matrix interfacial structure and properties.

Accordingly, the ultrahard composite materials of the invention consist of ultrahard particles distributed in fine or nano grain sized matrices, whereby the average grain size of the matrix material is organized to be at or close to the Hall-Petch departure critical grain size for the particular matrix material chosen, where grain softening for that material can be observed or is expected to be observed for finer grain sizes. For most known appropriate matrix materials this will occur for grain sizes in the nano range, typically in the range 5 to 100 nm or close to that range.

Accordingly, a key aspect of the method disclosed herein is the ability to control and optimize the nano grain size of the matrix including controlling the matrix precursor materials and, in so doing, optimize it in regard to maximizing the strength as a function of grain size. Thus, for each matrix material type chosen, it's strength may be maximised to best cope with the particular tensile stresses set up by virtue of it's thermal expansion mismatch with the ultrahard particles.

A particular embodiment of PCT application WO2006/032984 is an ultrahard composite material consisting of micron or sub-micron sized cBN particles in a nano grain sized titanium nitride (TiN) matrix. It may be noted from Table 1 that TiN has a large thermal expansion coefficient of about $9.4 \times 10^{-6}$ $K^{-1}$, and thus the thermal expansion difference between cBN as an ultrahard particle and TiN as a matrix material, at $8.4 \times 10^{-6}$ $K^{-1}$, is very large. It would thus be expected that large thermal expansion mismatch stresses would occur in this type of material. The resultant residual stresses in such a material could be such as to cause microcracking in the matrix, if the matrix were such as to be insufficiently strong to resist crack propagation.

TABLE 1

| Material | Thermal Expansion Coefficient $\alpha$ ($10^{-6}$ $K^{-1}$) | Ceramic class | m(matrix) p(hard particle) | $-\alpha$ cf. Diamond ($10^{-6}$ $K^{-1}$) | $-\alpha$ cf. cBN ($10^{-6}$ $K^{-1}$) |
|---|---|---|---|---|---|
| $Cr_3C_2$ | 10.3 | Carbide | m | 9.8 | 9.3 |
| NbN | 10.1 | B1 nitride | m | 9.6 | 9.1 |
| $ZrO_2$ | 10.0 | Oxide | m | 9.5 | 9.0 |
| TiN | 9.4 | B1 nitride | m | 8.9 | 8.4 |
| $Al_2O_3$ | 8.3 | Oxide | m | 7.8 | 7.3 |
| VN | 8.1 | B1 nitride | m | 7.6 | 7.1 |
| $Mo_2C$ | 7.8 | Carbide | m | 7.3 | 6.8 |
| TiC | 7.4 | B1 carbide | m | 6.9 | 6.4 |
| VC | 7.3 | B1 carbide | m | 6.8 | 6.3 |
| ZrN | 7.2 | B1 nitride | m | 6.7 | 6.2 |
| NbC | 7.2 | B1 carbide | m | 6.7 | 6.2 |
| HfN | 6.9 | B1 nitride | m | 6.4 | 5.9 |
| HfC | 6.9 | B1 carbide | m | 6.4 | 5.9 |
| ZrC | 6.7 | B1 carbide | m | 6.2 | 5.7 |
| TaC | 6.3 | B1 carbide | m | 5.8 | 5.3 |
| WC | 6.0 | Carbide | m & p | 5.5 | 5.0 |
| AlN | 5.7 | Nitride | m | 5.2 | 4.7 |
| $B_4C$ | 4.5 | Carbide | p | 4.0 | 3.5 |
| SiC | 4.4 | Carbide | m&p | 3.9 | 3.4 |

(continued)

| Material | Thermal Expansion Coefficient $\alpha$ $(10^{-6}\ K^{-1})$ | Ceramic class | m(matrix) p(hard particle) | $-\alpha$ cf. Diamond $(10^{-6}\ K^{-1})$ | $-\alpha$ cf. cBN $(10^{-6}\ K^{-1})$ |
|---|---|---|---|---|---|
| TaN | 3.6 | B1 nitride | m | 3.1 | 2.6 |
| $Si_3N_4$ | 3.2 | Nitride | m&p | 2.7 | 2.2 |
| CrN | 2.3 | B1 nitride | m | 1.8 | 1.3 |
| cBN | 1.0 | | p | 0.5 | 0 |
| Diamond | 0.5 | | p | 0 | - 0.5 |

H. Conrad et al. in reference [7], have reviewed the literature concerning the empirical relationship of hardness and grain size for titanium nitride (TiN). They conclude that the hardness and strength increases with a reduction in grain size ($d$) in the nano range and that a maximum occurs when $d$ = 50nm. As the grain size becomes smaller than this value an observed softening of the material is evident. Thus the critical value of grain size $d_c$, for Hall-Petch departure in TiN is 50nm. Thus a maximum in strength and hardness for TiN occurs at a grain size of 50nm, or close to this value.

A preferred embodiment of the present invention is thus ultrahard composite materials made up of cBN in a nano-matrix of titanium nitride, whereby the titanium nitride average grain size is between 20 and 80nm. A more preferred embodiment is where for such materials the TiN matrix grain size is between 30 and 70 nm. An even more preferred embodiment is where the matrix grain size is between 40 and 60nm. The most desirable embodiment is where the TiN matrix average grain size is 50nm or as close to this value as practically possible. In this way the mechanical properties of composite materials based upon cBN in titanium nitide matrices and their subsequent behavior in abrasive applications are expected to be greatly improved by causing the grain size of the TiN matrix to be as close to 50nm as practically possible.

Another embodiment of PCT application WO2006/032984 is micron or sub-micron diamond in a nano sized TiN matrix. The thermal expansion difference between diamond and TiN, at $8.9 \times 10^{-6}\ K^{-1}$ (Table 1), is even greater than between cBN and TiN. It would thus be expected that optimizing the nano grain size of the TiN matrix to be close to 50nm would be even more advantageous to the mechanical properties in the case of diamond ultrahard composites based upon diamond as the ultrahard particulate material.

Accordingly, yet another preferred embodiment of the present invention is thus ultrahard composite materials made up of diamond in a nano matrix of titanium nitride whereby the titanium nitride average grain size is between 20 and 80nm, preferably between 30 and 70nm, more preferably between 40 and 70nm, and most preferably as close to 50nm as practically possible.

Detailed empirical Hall-Petch plots and data are not at present available for all the materials disclosed in PCT application WO2006/032984 and EP 0 698 447, or those listed in Table 1. However, reference [7] provides review information for several metals, intermetallic compounds and a specific important carbide, namely tungsten carbide (WC). In this paper it is given that the Hall-Petch departure, $d_c$ for WC is close to 10nm.

The invention will now be described in more detail with reference to the following non-limiting examples.

**Example 1**

The method as taught in PCT application WO2006/32984 was used to make an ultrahard composite material comprising 85% by weight 1 micron average grain size cubic boron nitride in a 15% by weight continuous titanium nitride matrix. Specifically, the 1 micron cBN was coated in amorphous, micro-porous titania, $TiO_2$ by the sol-gel method using titanium iso-propoxide, $Ti(OC_3H_7)_4$. After drying in a vacuum oven at 60°C for 24 hrs, the coated cBN powder was heated in a stream of dry ammonia for 5 hrs at 1000°C. A heating rate of 10°C per minute was used. No intermediate calcining to crystallize the titania coat was specifically employed. The heat treatment in ammonia converted the amorphous $TiO_2$ coat directly to nano crystalline titanium nitride, TiN. This was confirmed using X-ray diffraction analysis, XRD. The titanium nitride coated cBN was then placed in a belt high pressure apparatus and subjected to high pressure hot pressing, at a temperature of about 1400°C for about 20 minutes and a pressure of about 5.5 GPa. This treatment caused the TiN coat to sinter and a fully dense cBN in a continuous TiN matrix composite material to be produced. The sintered piece of material was then also analysed using X-ray diffraction.

The grain size of the TiN coat on the cBN particles after ammonia heat treatment and the fully sintered TiN matrix after high pressure hot pressing was then determined using the well known Scherrer formula as applied to the principle X-ray diffraction peaks for TiN appearing between 35° and 45° (2θ) for cubic TiN.

The Scherrer formula may be written:

$$D = \frac{k\lambda}{\beta \cdot \cos\theta} \quad \ldots\ldots\ldots\ldots\ldots\ldots\ldots\ldots\ldots\ldots\ldots\ldots\ldots\ldots\ldots\ldots\ldots\ldots\ldots\ldots\ldots\ldots\ldots\ldots (8)$$

where D is the crystallite size (nm); λ the X-ray wavelength (Cu was used in these experiments); θ is the diffraction angle; *k* the Scherrer constant and β in this case equals, $\sqrt{\beta_i^2 - \beta_o^2}$ , with $\beta_i$ the measured integral or half peak height breadth of the sample, and $\beta_0$ the measured integral or half peak height of a standard. The value *of* k used was 0.9.

$\beta_o$ is usually determined using well-annealed powders in order to eliminate or reduce the peak broadening caused by crystal strain. $\beta_o$ was taken from a commercially available TiN micron particle sized powder heat treated at 1200°C for 3 hours.

Using this approach the grain size determined for the TiN coat on the cBN particles was 20.2nm. The grain size determined for the sintered TiN matrix was 39.6nm. As is expected from sintering theory and practice, some grain growth during sintering had occurred and the average grain size had increased from about 20 to about 40nm. The Scherrer method for estimating very fine grain sizes relies upon the broadening of X-ray diffraction lines by virtue of very fine grain or particle sizes. There are other sources of line broadening such as crystal lattice strain. These sources are largely ignored or imperfectly taken into account in the simple Scherrer analysis. As a result the estimates of grain size so obtained are considered to be under estimates of the true average grain size, the under estimate being of about 10 to 20% in magnitude. Taking this possible error into account the average grain size of the matrix may be considered to be from about 40 to 50nm.

The veracity of this estimate was confirmed by transmission electron microscopy, TEM, of a specially thinned sample of the composite which showed the TiN grains in the matrix to be about 50nm in size. Thus the TEM results are consistent with and confirm the XRD estimates.

H. Conrad, J. Narayan and K. Jung, International Journal of Refractory Metals and Harde Materials, vol 23, (2005), pages 301 to 305, [7] have reviewed much of the empirical information in the scientific literature concerning the effect of grain size on the hardness of TiN, with particular focus on the nanometer grain size range. They communicate that the hardness increases from about 22 GPa in single crystals of TiN to about 32 GPa when grain size is reduced to 50nm. For finer grain sizes than this TiN exhibits a softening and has a hardness close to about 26 GPa when the grain size approaches 10nm. Thus the hardness and by association the strength of TiN reaches a maximum at a grain size of about 50nm. The Hall-Petch departure point, critical grain size $d_c$ is thus 50nm for TiN. This example thus provides a detailed means for the generation of an ultrahard composite material comprising a high content (85 wt %) of fine (1μ) cBN in a continuous nano grain sized TiN matrix, where the average grain size of the matrix is at or close to the so-called Hall-Petch departure critical size for this particular matrix material, considered to be about 50nm. The particular high pressure sintering conditions chosen were such as to cause the average grain size of the TiN coat on the cBN particles to approximately double in size and approach the Hall-Petch departure value of about 50nm when the matrix formed.

Since, as far as hardness and strength is concerned as a function of grain size, this TiN matrix is expected to have maximum values of hardness and strength, it was expected that this particular version of ultrahard composite material would exhibit superior performance when tested in abrasive wear applications, when compared to other cBN based ultrahard composite materials where the matrices have grain sizes significantly larger, such as in the sub-micron (100nm to 1μ) or micron ranges or significantly smaller, such as less than about 25nm. The material produced was therefore tested in comparison to other materials by machining a very abrasive, hard to machine steel using highly specified and constant machining conditions. In comparison to materials with matrices with grain sizes of both sub-micron (100nm to 1μ) and less than about 25nm, the material produced in the manner described in this example, to have an average grain size at or close to the $d_c$ value for TiN (50nm), machined up to 50% more volume of steel before the tool wear scar geometry was considered to be such that the tool was worn out. This superior wear test result indicated superior mechanical properties. An ultrahard composite material of superior desired behavior in a wear application was thus herein demonstrated by virtue of causing the grain size of the continuous matrix to be at or close to the Hall-Petch departure critical size for the particular material of that matrix.

**Example 2**

A diamond powder with an average grain size of 1 micron was acid-cleaned and coated with nano titanium oxide, as taught in WO2006/032984. This powder was heat treated at 400°C for 3 hours in nitrogen. This heat treatment was followed by a heat treatment in flowing dry ammonia at 1000°C for 5 hours, using a heating rate of 10°C/min.

The crystallite size was calculated using the X-ray diffraction Scherrer method as described in Example 1, using a $\beta_o$, obtained from a sintered silicon disc as a standard, to correct for instrument- related line broadening. Scherrer calculation of the resultant TiN phase showed that the coating was of an average crystallite size of 26 nm. This powder was then sintered under the same conditions as described in Example 1, resulting in approximately 1 micron diamond in a matrix of 15 wt% TiN. The average crystallite size of the titanium nitride in the sintered material was estimated to be about 65 nm. This falls within 16 nm of the known Hall-Petch departure grain size for titanium nitride, which is 50 nm.

**Example 3**

A diamond powder with an average grain size of 1 micron was acid-cleaned and coated with nano titanium oxide, as taught in WO2006/032984 and heat treated in $N_2$-gas as described in Example 2. This powder was then nitrided for 5 hours at 1100°C, using a heating rate of 10°C/min. Crystallite sizes were determined using the same method as described in Example 2. After nitridation at a higher temperature, the average crystallite size of the TiN was increased to 31nm. The higher nitridation temperature in this example, compared with the one in Example 2, appeared to influence the final crystallite size in the sintered material, which at 85 nm is higher than the crystallite size observed in Example 2. This falls within 36 nm of the known Hall-Petch departure grain size for titanium nitride, which is 50 nm. The final sintered material was designed to consist of 1 micron in 15 wt% nano-TiN.

**Example 4**

A 2 micron diamond powder was acid-cleaned in oxidative gases to remove impurities and render the particle surfaces vitreophilic as taught in WO2006/032984. This powder was then coated with $TiO_2$ as taught in WO2006/032984, heat treated as described in Example 2 and nitrided in ammonia at 1000°C to yield a 15vol% TiN coat. This powder was then sintered under a pressure of 5.5 GPa, at 1350°C for about 20 minutes. The crystallite size of titanium nitride was determined using the same method as described in Example 2. The nano titanium nitride crystallite size in the sintered material was determined to be.72 nm. This falls within 23 nm of the known Hall-Petch departure grain size for titanium nitride, which is 50 nm.

**Example 5**

2 micron diamond powder was acid cleaned in oxidative gases to remove impurities and render the particle surfaces vitreophilic, as taught in WO2006/032984. This powder was then coated with $TiO_2$. as taught in WO2006/032984 and nitrided in dry ammonia at 1000°C to yield a 15vol% TiN coat. This powder was then sintered under a pressure of 5.5 GPa, at 1400°C for about 20 minutes. The crystallite size of titanium nitride was determined using the same method as described in Example 2. The nano titanium nitride crystallite size in the sintered material was determined to be 78 nm. This falls within 29 nm of the known Hall-Petch departure grain size for titanium nitride, which is 50 nm.

**Example 6**

2 micron diamond powder was acid cleaned in oxidative gases to remove impurities and render the particle surfaces vitreophilic, as taught in WO2006/032984. This powder was then coated with $TiO_2$ as taught in WO2006/032984 and nitrided in dry ammonia at 1000°C to yield a 15vol% TiN coat. This powder was then sintered under a pressure of 5.5 GPa, at 1450°C, for about 20 minutes. The crystallite size of titanium nitride was determined using the same method as described in Example 2. The nano titanium nitride crystallite size in the sintered material was determined to be 85 nm. This falls within 36 nm of the known Hall-Petch departure grain size for titanium nitride, which is 50 nm.

**Example 7**

Sub-micron cubic boron nitride was coated with 15 wt% amorphous 3-mol% yttria - stabilised zirconia as taught in WO2006/032984. This coated cBN was heat treated in air at 380°C for 1 hour and 600°C for 3 hours, using a heating rate of 5°C/min. The crystallite size of the heat treated powder, as determined by the Scherrer calculation, was 7 nm. The Scherrer calculations were done using the same method as described in Example 2. This was found to be in good agreement with the average grain size as determined by TEM analysis, which was determined to be around 5 nm. After sintering this powder at about 1400°C, for about 20 minutes under 5.5 GPa, the crystallite size, as determined by Scherrer calculation was between 18 and 23 nm (23 nm for the tetragonal phase and 18 nm for the monoclinic phase). At the time of filing, the exact Hall-Petch departure grain size for tetragonal and monoclinic phases of zirconia was not known.

### Example 8

Cubic boron nitride with an average grain size between 1 and 2 micron was coated with 15 vol% yttria-stabilized zirconia (2 mol% yttria), as taught in WO2006/032984. The coated powder was heat treated in air at 380°C for 1 hour and 500°C for 3 hours, using a heating rate of 5°C/min. This powder was sintered at about 1400°C. under 5.5 GPa, for about 20 minutes. The Scherrer-calculated crystallite size of the sintered material was between 16 and 20 nm (16 nm for the tetragonal phase and 20 nm for the monoclinic phase). The Scherrer calculations were done using the same method as described in Example 2. At the time of filing, the exact Hall-Petch departure grain size for tetragonal and monoclinic phases of zirconia was not known.

### Example 9

A diamond powder with an average grain size of 2 micron was acid-cleaned as described in Example 4. This powder was coated with amorphous 15 wt% yttria-stabilized zirconia (2mol% yttria). This powder was heat treated in a flowing gas stream of 10 % $H_2$ in Ar, at 380°C for 1 hour and 500°C for 2 hours, using a heating rate of 5°C/min. The heat treated powder was sintered under similar conditions as described in Example 1. XRD - Scherrer analysis of the sintered material, yielded a result of 25 nm for the tetragonal phase and 30 nm for the monoclinic phase. The Scherrer calculations were done using the same method as described in Example 2. At the time of filing, the exact Hall-Petch departure grain size for tetragonal and monoclinic phases of zirconia was not known.

### Example 10

cBN with an average particle size of 1.5 micron, was coated with $Cr(OH)_3$. 80 grams of cBN was dispersed in 2 litres of deionised water using a large horn ultrasonic probe at 30% amplitude for 15 minutes. The suspension was then allowed to cool to room temperature. 181.2 gram of $Cr(NO_3)_3$. $9H_2O$ was dissolved in 500 ml deionised water and this was added to the cBN suspension. 23.5 vol% $NH_4OH$ solution was added to the stirred suspension. pH was measured continuously using a pH meter. $NH_4OH$ was added until a pH of 9 was achieved. After settling, the $Cr(OH)_3$ coated cBN was washed with deionised water and ethanol. The dried powder was heat treated in air at 450°C for 5 hours, using a heating rate of 2°C/min and cooled naturally. This powder was then nitrided in a tube furnace in a flowing path of ammonia, using a flow rate of 50 litres/minutes, heated up to 800°C for 9 hours. X-ray diffraction analysis of this powder confirmed that it consists of cBN and hexagonal $Cr_2N$ phases. This powder was sintered at about 1400°C and 5.5 GPa for about 20 minutes. The Scherrer-calculated crystallite size of the $Cr_2N$ phase in the sintered materials was determined to be about 55 nm. The Scherrer calculations were done using the same method as described in Example 2. At the time of filing, the exact Hall-Petch departure grain size for $Cr_2N$ was not known.

### Example 11

A diamond powder consisting of an average grain size of 1 micron was acid-cleaned and coated with 15 wt% amorphous alumina, using the method as taught in WO2006/032984. More specifically, this coating was achieved by refluxing the diamond powder in aluminium tri-sec- butoxide. The powder was then dried and heat treated at 400°C for 3 hours, using a heating rate of 5°C/min. X-ray diffraction of this powder showed that the alumina coating was amorphous after the 400°C heat treatment. This coated diamond powder was then sintered at about 1400°C, under a pressure of 5.5 GPa for about 20 minutes. The crystallite size was calculated using the X-ray diffraction Scherrer method as described in Example 1, using a $\beta_o$, obtained from a sintered silicon disc as a standard, to correct for instrument- related line broadening.

X-ray diffraction Scherrer calculation of the alumina phase in the sintered material, showed that the approximate grain size of the alumina was 95nm. The Hall-Petch departure of the alumina phase was not known at the time of this filing.

### Example 12

Approximately 1 micron diamond was coated with silica, as taught in WO2006/032984. X-ray diffraction of the powder heat treated at 800°C (for 3 hours, using a heating rate of 5°C/min) showed that the silica phase was amorphous. After sintering under the same conditions as described in Example 1, X-ray diffraction confirmed that the quartz phase of silica was formed. The approximate grain size of the quartz, as determined by Scherrer calculation was 34 nm. The Scherrer calculations were done using the same method as described in Example 2. At the time of filing the Hall-Petch departure of silica, and the quartz phase in particular was not known. In the cases where the Hall-Petch departure grain size has not been identified as such, and is not currently available in the open literature, based on current understanding and knowledge, it is believed that the examples provided are such that the grain sizes fall within 30 nm of the Hall-Petch departure point in each case.

References:

1. J. Selsing; "Internal Sresses in Ceramics"; J. Am. Ceram. Soc., 1961, vo1.44, p 419.
2. D. Sherman, D. Brandon, "Mechanical Properties and their Relation to Microstructure", Handbook of Ceramic Hard Materials, Ed. Ralf Reidel, Vol1. p.93, pub. Wiley-VCH, 2000.
3. E. O. Hall, Proc. Roy. Soc. London B, 64:474,1951.
4. N. J. Petch, J. Iron Steel Inst., 174:25, 1953.
5. R.O. Scattergood, C. C. Koch, Scripta Metallurgica et Materialia, Vol. 27, p 1195-1200,1992.
6. J. R. Weertman, "Mechanical Behavior of Nanocrystalline Materials", Chapter 10, p. 397, in nanostructured Materials, Ed. C. C. Koch, Noyes Publications, 2002.
7. H. Conrad et al., International Journal of Refractory Metals & Hard Materials, 23, p301-305, 2005.
8. G. A. Slack and S. F. Bartram, Journal of Applied Physics, Vol. 46, No. 1, p. 89, 1975.
9. Handbook of Ceramic Hard Materials, Ed. Ralf Riedel, Vol1, Table 1, p.968, pub. Wiley-VCH, 2000.

**Claims**

1.  An ultrahard composite material comprising diamond or cubic boron nitride ultrahard particles, or a combination thereof, dispersed in a nano-grain sized matrix material comprising chromium nitride (CrN or $Cr_2N$), titanium nitride (TiN), tantalum nitride (TaN or $Ta_3N_5$), niobium nitride (NbN), vanadium nitride (VN), zirconium nitride (ZrN), hafnium nitride (HfN), silicon nitride ($Si_3N_4$), silicon dioxide ($SiO_2$), titanium carbide (TiC), tantalum carbide (TaC or $Ta_2C$), niobium carbide (NbC), vanadium carbide (VC), zirconium carbide (ZrC), hafnium carbide (HfC), silicon carbide (SiC), aluminium oxide ($Al_2O_3$), zirconium oxide ($ZrO_2$), or combinations thereof, wherein the average grain size of the matrix material, is within 30nm of the Hall-Petch departure grain size for the matrix material.

2.  A composite material according to claim 1, wherein the average grain size of the matrix material is within 20 nm of the Hall Petch departure grain size for the matrix material, preferably within 10 nm of the Hall Petch departure grain size for the matrix material, more preferably at or near the Hall Petch departure grain size for the matrix material.

3.  A composite material according to claim 1 or claim 2, wherein the ultrahard particles are sub-micron cubic boron nitride and the matrix material is nano-grain sized titanium nitride with an average grain size of between 20 and 80 nm, preferably between 30 nm and 70 nm, more preferably between 40 nm and 60 nm.

4.  A composite material according to claim 3, wherein the average grain size is about 40 nm.

5.  A composite material according to claim 1 or claim 2, wherein the ultrahard particles are cBN and the matrix material is zirconium oxide ($ZrO_2$), including the tetragonal and monoclinic phases thereof.

6.  A composite material according to claim 1 or claim 2, wherein the ultrahard particles are diamond and the matrix material is zirconium oxide ($ZrO_2$), including the tetragonal and monoclinic phases thereof.

7.  A composite material according to claim 1 or claim 2, wherein the ultrahard particles are cBN and the matrix material is chromium nitride, $Cr_2N$.

8.  A composite material according to claim 1 or claim 2, wherein the ultrahard particles are diamond and the matrix material is aluminium oxide ($Al_2O_3$).

9.  A composite material according to claim 1 or claim 2, wherein the ultrahard particles are diamond and the matrix material is silicon dioxide ($SiO_2$).

10. A composite material according to claim 9, wherein the matrix material is quartz.

**Patentansprüche**

1. Ultraharter Verbundwerkstoff, der ultraharte Partikel aus Diamant oder kubischem Bornitrid oder eine Kombination daraus umfasst, die in einem Matrixmaterial mit einer Korngröße im Nanometerbereich, das Chromnitrid (CrN oder $Cr_2N$), Titannitrid (TiN), Tantalnitrid (TaN oder $Ta_3N_5$), Niobnitrid (NbN), Vanadiumnitrid (VN), Zirconiumnitrid (ZrN), Hafniumnitrid (HfN), Siliziumnitrid ($Si_3N_4$), Siliziumdioxid ($SiO_2$), Titancarbid (TiC), Tantalcarbid (TaC oder $Ta_2C$), Niobcarbid (NbC), Vanadiumcarbid (VC), Zirconiumcarbid (ZrC), Hafniumcarbid (HfC), Siliziumcarbid (SiC), Aluminiumoxid ($Al_2O_3$), Zirconiumdioxid ($ZrO_2$) oder Kombinationen daraus umfasst, fein verteilt sind, wobei die durchschnittliche Korngröße des Matrixmaterials innerhalb von 30 nm zur Hall-Petch-Abweichungskorngröße für das Matrixmaterial liegt.

2. Verbundwerkstoff nach Anspruch 1, wobei die durchschnittliche Korngröße des Matrixmaterials innerhalb von 20 nm zur Hall-Petch-Abweichungskomgröße für das Matrixmaterial liegt, vorzugsweise innerhalb von 10 nm zur Hall-Petch-Abweichungskomgröße für das Matrixmaterial, bevorzugter bei oder nahe der Hall-Petch-Abweichungskomgröße für das Matrixmaterial.

3. Verbundwerkstoff nach Anspruch 1 oder Anspruch 2, wobei die ultraharten Partikel aus kubischem Bornitrid mit einer Korngröße im Submikrometerbereich bestehen und das Matrixmaterial Titannitrid mit einer Korngröße im Nanometerbereich mit einer durchschnittlichen Korngröße zwischen 20 und 80 nm, vorzugsweise zwischen 30 nm und 70 nm, bevorzugter zwischen 40 nm und 60 nm ist.

4. Verbundwerkstoff nach Anspruch 3, wobei die durchschnittliche Korngröße etwa 40 nm beträgt.

5. Verbundwerkstoff nach Anspruch 1 oder Anspruch 2, wobei die ultraharten Partikel aus cBN bestehen und das Matrixmaterial Zirconiumdioxid ($ZrO_2$) einschließlich seiner tetragonalen und monoklinen Phase ist.

6. Verbundwerkstoff nach Anspruch 1 oder Anspruch 2, wobei die ultraharten Partikel aus Diamant bestehen und das Matrixmaterial Zirconiumdioxid ($ZrO_2$) einschließlich seiner tetragonalen und monoklinen Phase ist.

7. Verbundwerkstoff nach Anspruch 1 oder Anspruch 2, wobei die ultraharten Partikel aus cBN bestehen und das Matrixmaterial Chromnitrid $Cr_2N$ ist.

8. Verbundwerkstoff nach Anspruch 1 oder Anspruch 2, wobei die ultraharten Partikel aus Diamant bestehen und das Matrixmaterial Aluminiumoxid ($Al_2O_3$) ist.

9. Verbundwerkstoff nach Anspruch 1 oder Anspruch 2, wobei die ultraharten Partikel aus Diamant bestehen und das Matrixmaterial Siliziumdioxid ($SiO_2$) ist.

10. Verbundwerkstoff nach Anspruch 9, wobei das Matrixmaterial Quarz ist.

**Revendications**

1. Matériau composite ultradur comprenant des particules ultradures de diamant ou de nitrure de bore cubique, ou une combinaison de celles-ci, dispersées dans un matériau de matrice ayant une taille de grain nanométrique comprenant du nitrure de chrome (CrN ou $Cr_2N$), du nitrure de titane (TiN), du nitrure de tantale (TaN ou $Ta_3N_5$), du nitrure de niobium (NbN), du nitrure de vanadium (VN), du nitrure de zirconium (ZrN), du nitrure de hafnium (HfN), du nitrure de silicium ($Si_3N_4$), du dioxyde de silicium ($SiO_2$) du carbure de titane (TiC), du carbure de tantale (TaC ou $Ta_2C$), du carbure de niobium (NbC), du carbure de vanadium (VC), du carbure de zirconium (ZrC), du carbure de hafnium (HfC), du carbure de silicium (SiC), de l'oxyde d'aluminium ($Al_2O_3$), de l'oxyde de zirconium ($ZrO_2$), ou leurs combinaisons, dans lequel la taille de grain moyenne du matériau de matrice, est située dans les 30 nm de la taille de grain s'écartant de la loi de Hall-Petch pour le matériau de matrice.

2. Matériau composite selon la revendication 1, dans lequel la taille de grain moyenne du matériau de matrice est située dans les 20 nm de la taille de grain s'écartant de la loi de Hall-Petch pour le matériau de matrice, de préférence dans les 10 nm de la taille de grain s'écartant de la loi de Hall-Petch pour le matériau de matrice.

3. Matériau composite selon la revendication 1 ou la revendication 2, dans lequel les particules ultradures sont en nitrure de bore cubique submicronique et le matériau de matrice est du nitrure de titane ayant une taille de grain nanométrique avec une taille de grain moyenne comprise entre 20 et 80 nm, de préférence entre 30 nm et 70 nm, mieux encore entre 40 nm et 60 nm.

4. Matériau composite selon la revendication 3, dans lequel la taille de grain moyenne est d'environ 40 nm.

5. Matériau composite selon la revendication 1 ou la revendication 2, dans lequel les particules ultradures sont en cBN et le matériau de matrice est l'oxyde de zirconium ($zrO_2$), y compris ses phases tétragonales et monocliniques.

6. Matériau composite selon la revendication 1 ou la revendication 2, dans lequel les particules ultradures sont en diamant et le matériau de matrice est l'oxyde de zirconium ($ZrO_2$), y compris ses phases tétragonales et monocliniques.

7. Matériau composite selon la revendication 1 ou la revendication 2, dans lequel les particules ultradures sont en cBN et le matériau de matrice est le nitrure de chrome, $Cr_2N$.

8. Matériau composite selon la revendication 1 ou la revendication 2, dans lequel les particules ultradures sont en diamant et le matériau de matrice est l'oxyde d' aluminium ($Al_2O_3$).

9. Matériau composite selon la revendication 1 ou la revendication 2, dans lequel les particules ultradures sont en diamant et le matériau de matrice est le dioxyde de silicium ($SiO_2$).

10. Matériau composite selon la revendication 9, dans lequel le matériau de matrice est le quartz.

Figure 1

Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006032984 A
- EP 0698447 A
- WO 200632984 A

**Non-patent literature cited in the description**

- **J. Selsing.** Internal Sresses in Ceramics. *J. Am. Ceram. Soc.,* 1961, vol. 44, 419
- **H. Conrad ; J. Narayan ; K. Jung.** *International Journal of Refractory Metals and Harde Materials,* 2005, vol. 23, 301-305
- Mechanical Properties and their Relation to Microstructure. **D. Sherman ; D. Brandon.** Handbook of Ceramic Hard Materials. Wiley-VCH, 2000, vol. 1, 93
- **E. O. Hall.** *Proc. Roy. Soc. London B,* 1951, vol. 64, 474
- **N. J. Petch.** *J. Iron Steel Inst.,* 1953, vol. 174, 25
- **R.O. Scattergood ; C. C. Koch.** *Scripta Metallurgica et Materialia,* 1992, vol. 27, 1195-1200
- Mechanical Behavior of Nanocrystalline Materials. **J. R. Weertman.** nanostructured Materials. Noyes Publications, 2002, 397
- **H. Conrad et al.** *International Journal of Refractory Metals & Hard Materials,* 2005, vol. 23, 301-305
- **G. A. Slack ; S. F. Bartram.** *Journal of Applied Physics,* 1975, vol. 46 (1), 89
- Handbook of Ceramic Hard Materials. Wiley-VCH, 2000, vol. 1, 968